# EUROPÄISCHE PATENTSCHRIFT

(11) **EP 3 221 713 B1**
(45) Veröffentlichungstag und Bekanntmachung des Hinweises auf die Patenterteilung: **06.03.2019**
(21) Anmeldenummer: 15771877.6
(22) Anmeldetag: 18.09.2015
(51) Int. Cl.: G01S 7/03, G01S 7/40, G01S 13/93

(54) **ELEKTRONISCHE STEUEREINRICHTUNG FÜR RADARSENSOREN**
ELECTRONIC CONTROL DEVICE FOR RADAR SENSORS
DISPOSITIF DE COMMANDE ÉLECTRONIQUE POUR CAPTEURS RADAR

(30) Priorität: 18.11.2014 DE 102014223469
(43) Veröffentlichungstag der Anmeldung: 27.09.2017
(73) Patentinhaber: Robert Bosch GmbH, 70442 Stuttgart (DE)
(72) Erfinder: STEINBUCH, Dirk, 71299 Wimsheim (DE); OTT, Michael, 70378 Stuttgart (DE); STEINHAUER, Matthias, 71711 Steinheim (DE)
(86) Internationale Anmeldenummer: PCT/EP2015/071422
(87) Internationale Veröffentlichungsnummer: WO 2016/078799

(56) Entgegenhaltungen:
- EP-A2- 2 911 027
- WO-A1-2013/062691
- DE-A1-102012 201 990

## Beschreibung

Die Erfindung betrifft eine elektronische Steuereinrichtung für Radarsensoren, insbesondere für Fahrerassistenzsysteme in Kraftfahrzeugen, mit einem integrierten Bauelement zur Erzeugung und Verarbeitung von Hochfrequenzsignalen, und einem Controller zur Steuerung von Funktionen dieses Bauelements, einschließlich Überwachungsfunktionen zur Überwachung der Funktionsfähigkeit des Radarsensors.

### Stand der Technik

In Kraftfahrzeugen werden Radarsensoren zunehmend für sicherheitsrelevante Assistenzfunktionen eingesetzt, beispielsweise für eine Abstandsregelung und/oder für Kollisionswarn- oder Kollisionsvermeidungssysteme. Da Fehlfunktionen des Radarsensors in diesen Anwendungen gravierende Folgen haben können, ist es wesentlich, die Funktionsfähigkeit des Radarsensors engmaschig zu überwachen. Aus diesem Grund sind in bekannten Steuereinrichtungen Überwachungsroutinen vorgesehen, mit denen es möglich ist, wesentliche Funktionen des Radarsensors und der Steuereinrichtung bei laufendem Betrieb ständig oder von Zeit zu Zeit zu überwachen, so dass die Steuereinrichtung eine gewisse Selbstdiagnosefähigkeit aufweist.

Vor Inbetriebnahme des Radarsensors sollten auch die Überwachungsfunktionen ihrerseits einem Funktionstest unterzogen werden, damit sichergestellt ist, dass die Überwachungsfunktionen die Fehlerzustände, die sie überwachen sollen, auch richtig erkennen und dass die Steuereinrichtung auf die erkannten Fehler angemessen reagiert, beispielsweise mit einer teilweisen oder vollständigen Selbstabschaltung, Ausgabe von Fehlersignalen und dergleichen.

Für den Funktionstest der Überwachungsfunktionen werden typischerweise seriennahe Radarsensoren und zugehörige Steuereinrichtungen herangezogen, und über externe Modifikationen werden Fehler in das System injiziert. Die Software der Steuereinrichtung muss diese Fehler erkennen und entsprechende Maßnahmen einleiten. Diese Fehlerreaktion wird dann während der Tests beobachtet und bewertet.

So ist beispielsweise aus der DE 102012201990 A1 ein Radarsensor für Kraftfahrzeuge bekannt, der die Merkmale des Oberbegriffs des Anspruchs 1 aufweist.

Aus der WO2013/062691 A1 ist ein Testinstrument bekannt, das ein erstes Verarbeitungssystem aufweist und das so programmierbar ist, dass ein oder mehrere Testprogramme auf einem an das Testinstrument angeschlossenen, zu testenden Gerät, betrieben werden können und dabei die Bedienung des Geräts steuert und ein zweites Verarbeitungssystem aufweist, das das Gerät testet indem es eine programmierbare Logik aufweist, mit der ein oder mehrere Test zur Funktionsprüfung des Geräts durchgeführt werden.

In den elektronischen Steuereinrichtungen für Radarsensoren werden zunehmend integrierte Hochfrequenzbauelemente, sogenannten MMICs (Monilithic Microwave Integrated Circuit) eingesetzt. Solche MMICs können den gesamten Hochfrequenzteil für mehrere Sende- und Empfangskanäle des Radarsensors sowie zusätzlich einen integrierten Controller (Microcontroller) zur Steuerung der einzelnen Komponenten des MMICs und zur Steuerung des Datenverkehrs mit einer übergeordneten, externen Steuerung enthalten. Die hochintegrierte Bauweise hat zwar zahlreiche Vorteile, führt jedoch zu Schwierigkeiten, wenn für die Funktionstests interne Fehlerzustände in den MMICs erzeugt werden müssen.

Zwar ist es im Prinzip mit Hilfe spezieller Software möglich, solche Fehlerzustände zu erzeugen, doch müssen die Funktionstests unter praxisnahen Bedingungen durchgeführt werden, insbesondere auch unter Verwendung der freigegebenen Seriensoftware, bei der bestimmte Modifikationen, die die Durchführung von Funktionstests unterstützen würden, nicht zulässig sind.

Bei bekannten Verfahren zur Durchführung der Funktionstests werden Signalleitungen und/oder Programmierleitungen auf der Leiterplatte des MMICs mit Nadeladaptern kontaktiert, um Ausgangssignale gezielt zu verfälschen bzw. Datenpakete gezielt zu manipulieren.

Nachteilig an diesen Verfahren ist jedoch, dass der Radarsensor demontiert und geöffnet werden muss, damit man Zugang zu den Leitungen erhält. Diese Änderung der Umgebung kann zur Verfälschung von Fehlerreaktionen führen, die im realen Betrieb nicht auftreten. Außerdem ist die Demontage und erneute Montage des Radarsensors zeit- und arbeitsaufwändig und daher kostspielig.

### Offenbarung der Erfindung

Aufgabe der Erfindung ist es, die Durchführung aussagekräftiger Funktionstests bei Steuereinrichtungen für Radarsensoren zu vereinfachen.

Diese Aufgabe wird erfindungsgemäß gelöst durch einen in das Bauelement integrierten Fehlerinjektor zur Erzeugung definierter Fehlerzustände für eine Funktionsprüfung der Überwachungsfunktionen.

Erfindungsgemäß wird somit das Bauelement (MMIC) selbst so modifiziert, dass es in der Lage ist, aufgrund eines internen Programms und/oder eines externen Befehls wohldefinierte Fehlerzustände zu erzeugen, so dass sich beim Betrieb des Radarsensors mit der zugelassenen Seriensoftware überprüfen lässt, ob diese Fehler richtig erkannt und angemessen behandelt werden.

Vorteilhafte Ausgestaltungen und Weiterbildungen der Erfindung sind in den Unteransprüchen angegeben.

Der Fehlerinjektor kann Schaltungskomponenten aufweisen, die in dem MMIC eigens zu dem Zweck vorgesehen sind, die gewünschten Fehlerzustände zu erzeugen, beispielsweise durch Kurzschließen, Unterbrechen oder Bedämpfen von Signal- oder Steuerleitungen, Erzeugen und Injektion von Rauschsignalen und dergleichen.

Im allgemeinen wird das MMIC auch einen internen Controller enthalten, mit dem einzelne Funktionskomponenten des Hochfrequenzteils gesteuert werden können. In dem Fall kann der Fehlerinjektor auch ganz oder teilweise durch ein Softwaremodul gebildet werden, das auf dem internen Controller läuft und die Fehlerzustände durch entsprechende Ansteuerung der durch den Controller gesteuerten Komponenten hervorruft.

Wenn die Überwachungsfunktionen ebenfalls auf dem internen Controller des MMICs implementiert sind, kann dieser Controller auch autonom eine Selbsttestroutine ausführen, bei der mit Hilfe des Fehlerinjektors nach einem bestimmten Programm verschiedene Fehlerzustände erzeugt werden und der Controller selbst die dadurch ausgelösten Reaktionen der Überwachungsfunktionen mit entsprechenden, gespeicherten Soll-Reaktionen abgleicht, so dass an die externe Steuerung nur eine Statusmeldung ausgegeben zu werden braucht, die angibt, dass kein Fehler vorliegt oder welche Arten von Fehler festgestellt wurden.

Eine solche Selbsttest-Routine kann wahlweise durch einen externen Befehl ausgelöst werden oder unter bestimmten Bedingungen selbsttätig durch den internen Controller ausgelöst werden, beispielsweise jeweils beim Einschalten der Betriebsspannung (Power-Up-Modus des MMIC). In diesem Fall beschränken sich die notwendigen Anpassungen der Seriensoftware darauf, dass die Software in der Lage sein muss, die Statusmeldungen bzw. Fehlermeldungen des MMIC zu empfangen und zu verarbeiten.

In einer anderen Ausführungsform kann die Selbsttestroutine auch dadurch ausgelöst werden, dass ein Signal an einen speziell für diesen Zweck vorgesehenen Port des MMICs angelegt wird. Dieser Port sollte vorzugsweise mechanisch so gestaltet sein, dass er nicht ohne weiteres zugänglich ist, so dass das Signal nur dann angelegt werden kann, wenn der Radarsensor teilweise demontiert wurde. Das erfordert zwar einen gewissen Arbeitsaufwand bei der Auslösung der Selbsttestroutine, verringert jedoch die Gefahr, dass die Fehlerinjektion nicht unbeabsichtigt durch Anlegen eines Signals an diesen freien Port aktiviert wird.

In einer anderen Ausführungsform kann der Fehlerinjektor durch entsprechende Befehle aktiviert werden, die von der Seriensoftware erzeugt werden. Die Befehle können sich dabei auf die Aktivierung vorprogrammierter Fehlerinjektionssequenzen beziehen oder auch auf die Auswahl und Aktivierung einzelner Fehlerzustände. Die dazu notwendigen Anpassungen in der Seriensoftware bestehen lediglich im Hinzufügen eines zusätzlichen Softwaremoduls für die Selbsttests, lassen jedoch die Software für den regulären Betrieb des Radarsensors unberührt, so dass keine unzulässigen Modifikationen an dieser Software vorgenommen zu werden brauchen.

Die verschiedenen Möglichkeiten zur Aktivierung des Fehlerinjektors oder ausgewählter Funktionen desselben sind miteinander kombinierbar. In einer bevorzugten Ausführungsform erlaubt der Fehlerinjektor für jede implementierte Überwachungsfunktion die Injektion mindestens eines Fehlers, mit dem diese Überwachungsfunktion getestet werden kann.

Im folgenden werden Ausführungsbeispiele anhand der Zeichnung näher erläutert.

Es zeigen:
- Fig. 1: ein Blockdiagramm eines Radarsensors mit zugehöriger Steuereinrichtung;
- Fig. 2: ein Blockdiagramm eines MMIC, das einen wesentlichen Bestandteil der Steuereinrichtung des Radarsensors nach Fig. 1 bildet;
- Fig. 3: eine Einzeldarstellung eines Signalerzeugers in dem MMIC nach Fig. 2;
- Fig. 4: eine Einzeldarstellung eines Sendeteils in dem MMIC;
- Fig. 5: eine Einzeldarstellung eines Empfangsteils in dem MMIC;
- Fig. 6: eine Einzeldarstellung einer digitalen Basisbandsignal-Verabeitungsstufe in dem MMIC; und
- Fig. 7: eine Einzeldarstellung einer Steuereinheit in dem MMIC.

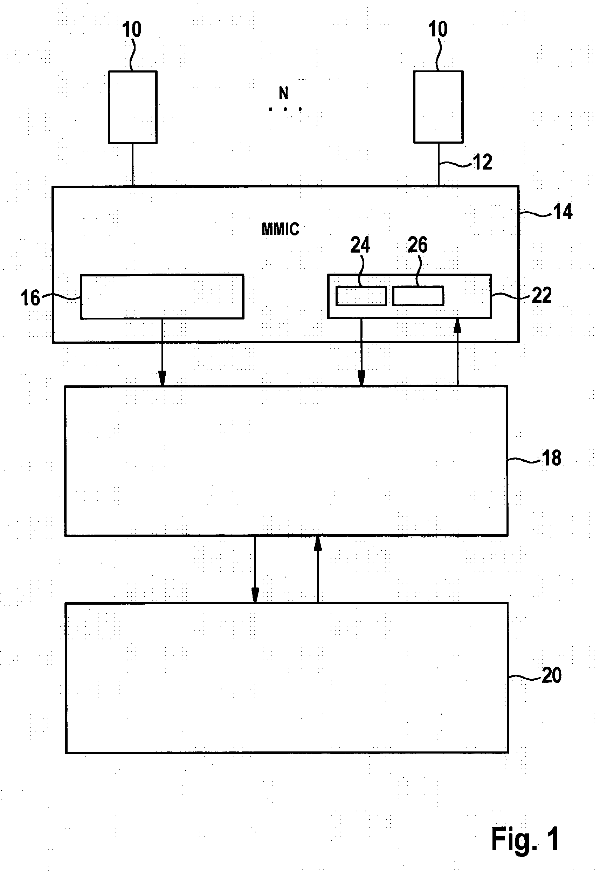

In Fig. 1 ist schematisch ein winkelauflösender Radarsensor für ein Kraftfahrzeug gezeigt, der N nebeneinander angeordnete Antennenelemente 10 aufweist, die über Hochfrequenzleitungen 12, beispielsweise Mikrostreifenleiter oder Hohlleiter, mit einem integrierten Bauelement 14 (MMIC) verbunden sind. Die Antennenelemente 10 oder zumindest einige von ihnen sind sowohl als Sendeantennen zum Senden der Radarsignale als auch als Empfangsantennen zum Empfang der Radarechos betreibbar. Als Beispiel soll angenommen werden, dass es sich bei dem Radarsensor um ein FMCW-Radar (Frequency Modulated Continuous Wave) handelt, bei dem die Frequenz der von den Antennenelementen 10 emittierten Signale rampenförmig moduliert wird und die empfangenen Radarechos jeweils mit einem Teil des Sendesignals gemischt werden, so dass man ein Basisbandsignal mit deutlich niedriger Frequenz erhält, dessen (komplexe) Amplitude Information über den Abstand und die Relativgeschwindigkeit des georteten Objekts enthält. Anhand von Phasen- und/oder Amplitudenunterschieden zwischen den von den verschiedenen Antennenelementen 10 empfangenen Signalen lässt sich außerdem der Azimutwinkel des georteten Objekts zumindest abschätzen.

Das integrierte Bauelement 14, im folgenden kurz als MMIC bezeichnet, enthält die gesamte Hochfrequenz-Elektronik für alle Sende- und Empfangskanäle, also für alle N Antennenelemente 10, und es enthält außerdem eine integrierte digitale Basisbandsignal-Verarbeitungsstufe 16, die digitalisierte und geeignet aufbereitete Basisbandsignale an einen externen Controller 18 ausgibt. Der Controller 18 bestimmt durch Schnelle Fourier-Transformation die Spektren der jeweils für eine Frequenzrampe aufgezeichneten Basisbandsignale und bestimmt daraus die Abstände, Relativgeschwindigkeiten und Azimutwinkel der georteten Objekte. Diese Information wird dann an ein Fahrerassistenzsystem 20, beispielsweise ein Kollisionswarnsystem übermittelt.

Das Fahrerassistenzsystem 20 kann seinerseits durch Befehle an den externen Controller 18 die Funktionsweise des Radarsensors beeinflussen.

Das MMIC enthält eine interne Steuereinheit 22, die verschiedene Funktions-komponenten des MMIC steuert und über eine digitale Schnittstelle mit dem externen Controller 18 kommuniziert. Auf diesem Wege kann der externe Controller 18 Befehle an das MMIC übermitteln, die dann durch die interne Steuereinheit 22 des MMICs umgesetzt werden.

Als eine Untereinheit enthält die interne Steuereinheit 22 ein Überwachungsmodul 24, das die Zustände und Funktionen verschiedener Funktionskomponenten des MMIC überwacht und entsprechende Statusmeldungen an den externen Controller 18 übermitteln kann.

Weiterhin enthält die interne Steuereinheit 22 einen Fehlerinjektor 26, mit dem es möglich ist, bestimmte, vorab definierte interne Fehlerzustände im MMIC hervorzurufen. Auf diese Weise ist es möglich, auch das Überwachungsmodul 24 einer Funktionsprüfung zu unterziehen, indem mit Hilfe des Fehlerinjektors gezielt Fehlerzustände herbeigeführt werden und dann geprüft wird, ob diese Fehler vom Überwachungsmodul 24 bzw. der übergeordneten Software erkannt werden.

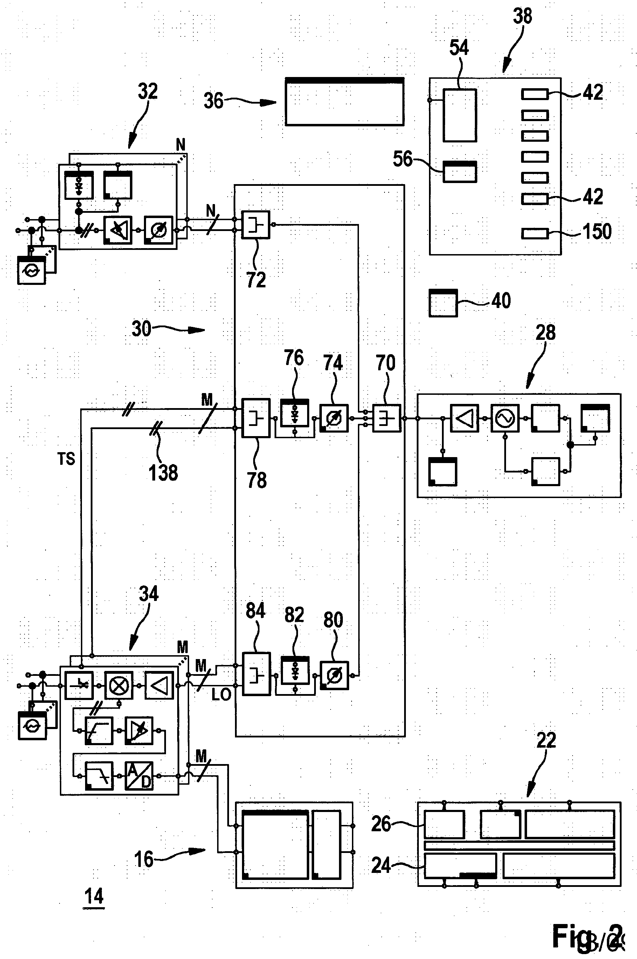

In Fig. 2 sind die wesentlichen Teilsysteme des MMIC 14 als Blockdiagramm dargestellt.

Ein Signalerzeuger 28 liefert ein Hochfrequenzsignal, das durch einen Signalverteiler 30 aufgeteilt und an mehrere Systemkomponenten weitergeleitet wird, unter anderem an ein Sendeteil 32. Das Sendeteil 32 weist N parallele Kanäle auf, die die N Antennenelemente 10 speisen, so dass das Hochfrequenzsignal über diese Antennenelemente als Radarsignal abgestrahlt wird.

Ein Empfangsteil 34 weist M Kanäle zur Verarbeitung der von den Antennenelementen 10 empfangenen Radarechos auf. In jedem Kanal wird das empfangene Signal mit einem lokalen Oszillatorsignal LO gemischt, das vom Signalverteiler 30 zur Verfügung gestellt wird und dem vom Signalerzeuger 28 erzeugten Hochfrequenzsignal entspricht. Durch Mischen dieser Signale erhält man jeweils ein Basisbandsignal, dessen Frequenz dem Frequenzunterschied zwischen dem empfangenen Signal und dem lokalen Oszillatorsignal entspricht und in einem niedrigeren Frequenzband, dem Basisband, liegt. Dieses Basisbandsignal wird digitalisiert und an die digitale Basisbandsignal-Verarbeitungsstufe 16 ausgegeben.

Neben den oben beschriebenen Komponenten und der internen Steuereinheit 22 enthält das MMIC 14 noch einen Taktsignalgenerator 36, eine Schnittstelleneinheit 38 und einen integrierten Temperatursensor 40.

Der Taktsignalgenerator 36 erzeugt verschiedene, miteinander synchronisierte Taktsignale, die von den verschiedenen Systemkomponenten benötigt werden.

Die Schnittstelleneinheit 38 enthält verschiedene Ein- und Ausgabeports 42, über die das MMIC mit dem externen Controller 18 und ggf. anderen Baugruppen, z.B. anderen MMICs, kommuniziert.

Die Schnittstelleneinheit 38 enthält außerdem ein Spannungsversorgungsteil 54 mit mehreren Spannungsreglern, die geregelte Betriebsspannungen für die übrigen Funktionskomponenten des MMIC zur Verfügung stellen, sowie einen Spannungsüberwachungsblock 56 zur Überwachung der ausgegebenen Betriebsspannungen.

Mit Hilfe des Temperatursensors 40 wird überwacht, ob die Temperatur des MMIC innerhalb eines zulässigen Bereiches liegt.

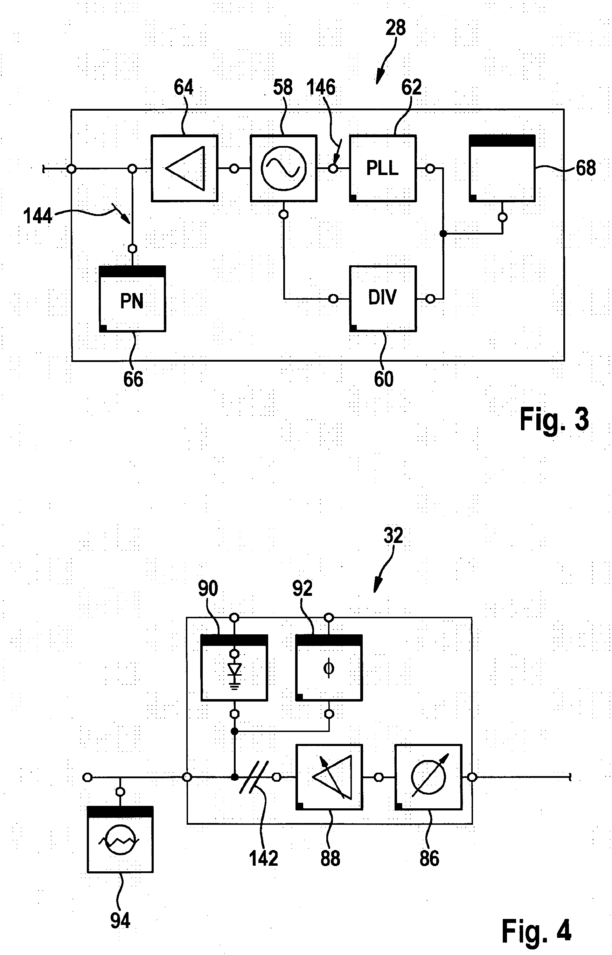

Der Signalerzeuger 28 ist in Fig. 3 noch einmal gesondert dargestellt und enthält einen spannungsgeregelten lokalen Oszillator 58, einen Frequenzteiler 60 und eine Phasenverriegelungsschaltung 62 (PLL; Phase Locked Loop), mit denen die Frequenz und Phase des Ausgangssignals des Oszillators in einem geschlossenen Regelkreis geregelt werden.

Das Ausgangssignal des Oszillators wird in einem Verstärker 64 verstärkt und an den Signalverteiler 30 (Fig. 2) ausgegeben. Ein Rauschdetektor 66 überwacht das Phasenrauschen am Ausgang des Verstärkers 64, und ein Phasendetektor 68 überwacht die Phasenverriegelung der PLL.

Der Signalverteiler 30 (Fig. 2) enthält eine erste Verteilerstufe 70, die das vom Signalerzeuger 28 gelieferte Hochfrequenzsignal in einen Sendezweig für das Sendeteil 32, einen Testsignal-Zweig und einen LO-Zweig für das Empfangsteil 34 aufteilt. Der Sendezweig enthält eine weitere Verteilerstufe 72 zur Aufteilung des zu sendenden Signals auf die N Kanäle des Sendeteils 32. Der Testsignal-Zweig enthält einen IQ-Modulator 74, mit dem sich die Phase des Signals drehen und bei fortgesetzter Phasendrehung auch die Frequenz verändern lässt, einen Leistungssensor 76 und eine Verteilerstufe 78 zur Aufteilung des Hochfrequenzsignals in Testsignale TS für die M Kanäle des Empfangsteils 34.

Entsprechend enthält auch der LO-Zweig, der die lokalen Oszillatorsignale LO für die vier Kanäle des Empfangsteils 34 liefert, einen IQ-Modulator 80, einen Leistungssensor 82 und eine Verteilerstufe 84.

Ein einzelner Kanal des Sendeteils 32 ist in Fig. 4 gesondert dargestellt und enthält einen weiteren IQ-Modulator 86, einen regelbaren Verstärker 88, einen Leistungssensor 90 und einen Phasensensor 92.

Bei einem typischen mechanischen Aufbau des Radarsensors ist das MMIC 14 auf einer nicht gezeigten Platine montiert, auf der sich Leiterbahnen zur Übertragung der Hochfrequenzsignale zwischen dem MMIC und den Antennenelementen 10 befinden. Der elektrische Kontakt zwischen dem MMIC und diesen Leiterbahnen wird über Lötkugeln hergestellt, die aufgrund der mechanischen Erschütterungen beim Einsatz des Radarsensors in einem Kraftfahrzeug einer erheblichen mechanischen Beanspruchung ausgesetzt sind und deshalb besonders überwacht werden müssen. Aus diesem Grund ist jedem Kanal des Sendeteils 32 ein Kontaktprüfer 94 zugeordnet, der den elektrischen Kontakt an der betreffenden Lötkugel überwacht. Die Überwachung kann beispielsweise dadurch geschehen, dass auf die betreffende Leitung eine Gleichspannung aufgeprägt wird und geprüft wird, ob auf der Leitung ein entsprechender Gleichstrom fließt. Wenn das nicht der Fall ist, deutet dies darauf hin, dass der Kontakt an der Lötkugel unterbrochen ist.

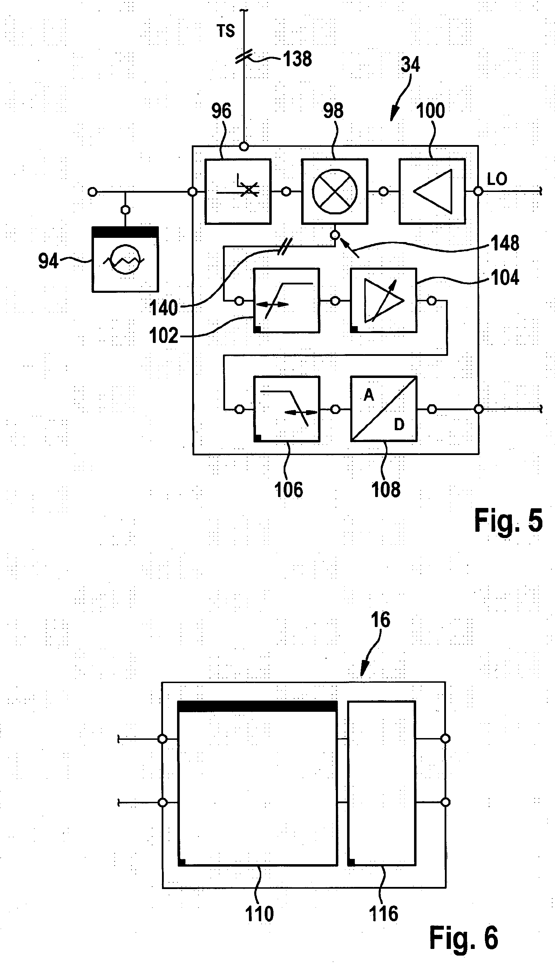

Entsprechende Kontaktprüfer 94 sind auch jedem Eingangskanal des Empfangsteils 34 zugeordnet, von denen einer in Fig. 5 gesondert dargestellt ist. Der Hochfrequenzeingang jedes Kanals ist über einen Koppler 96 mit einem Mischer 98 verbunden, dem über einen Verstärker 100 auch das lokale Oszillatorsignal LO zugeführt wird. Das Mischprodukt wird über einen Hochpass 102, einen regelbaren Verstärker 104 und einen Tiefpass 106 an einen Analogeingang eines Analog/Digital-Wandlers 108 weitergeleitet, dessen digitales Ausgangssignal dann an die Basisbandsignal-Verarbeitungsstufe 16 weitergeleitet wird, die gesondert in Fig. 6 gezeigt ist.

Der Koppler 96 dient dazu, das Testsignal TS in den Mischer 98 einzukoppeln, so dass der Mischer einem Funktionstest mit einem definierten Testsignal unterzogen werden kann, dass ein vom Antennenelement 10 empfangenes "echtes" Radarecho simuliert.

Die M digitalen Ausgangssignale des Empfangsteils 34 liegen am Eingang einer Basisband-Konditionierschaltung 110 der Basisbandsignal-Verarbeitungsstufe 16 an und werden dort auf Phasengleichlauf und Amplitudengleichlauf geprüft. Gleichlauffehler, die beispielsweise durch Alterungsdefekte verursacht sein können, werden erforderlichenfalls korrigiert. Die konditionierten Basisbandsignale werden dann parallel an einen LVDS-Treiber 116 weitergeleitet und schließlich über einen der Ports 42 (LVDS-Port) an den externen Controller 18 übergeben.

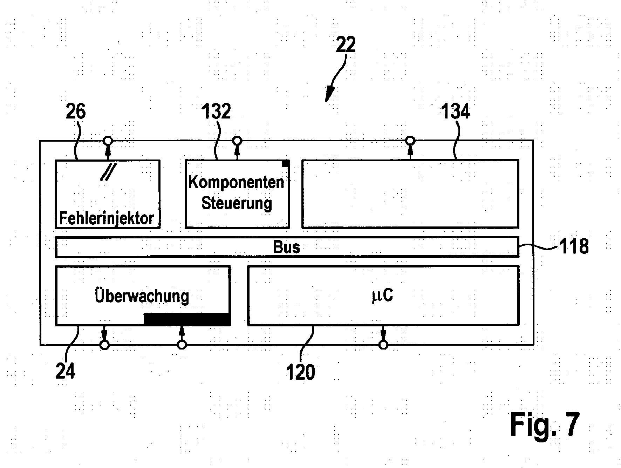

Die interne Steuereinheit 22 ist in Fig. 7 gesondert dargestellt und enthält eine Anzahl von Funktionsmodulen, die teils als Hardwarekomponenten und teils als Softwaremodule ausgeführt sind und über einen lokalen Bus 118 miteinander kommunizieren. Kernstück der Steuereinheit ist ein interner Controller (Mikrocontroller) 120, der Programme ausführt, die in einem nichtflüchtigen Speicher gespeichert sind.

Ein Steuerungsmodul 132 steuert eine Vielzahl von Funktionskomponenten des MMIC. Der Block, der in Fig. 7 das Steuerungsmodul 132 symbolisiert, ist in der rechten oberen Ecke durch ein schwarzes Quadrat gekennzeichnet. Korrespondierend dazu sind in Fig. 2 bis 6 die Funktionsblöcke, die durch dieses Modul gesteuert werden, durch ein schwarzes Quadrat in der linken unteren Ecke gekennzeichnet. Dazu gehören beispielsweise der Frequenzteiler 60, die PLL 62, der Rauschdetektor 66 und der Phasendetektor 68 des Signalerzeugers 28 (Fig. 3), ebenso die IQ-Modulatoren 74 und 80 des Signalverteilers 30 (Fig. 2), die IQ-Modulatoren 86, Verstärker 88 und Phasendetektoren 92 der verschiedenen Kanäle des Sendeteils 32 (Fig. 4), die Filter und Verstärker des Empfangsteils 34 (Fig. 5) und die Basisband-Konditionierschaltung 110 in der digitalen Basisbandsignal-Verarbeitungsschaltung 16 (Fig. 6).

Weitere Funktionen und Module der Steuereinheit 22 sind in Fig. 7 durch einen Block 134 symbolisiert. Dazu können beispielsweise ein System zur Fehlerbehandlung sowie verschiedene Signalgeneratoren gehören, die verschiedene im MMIC benötigte Signale erzeugen wie z. B. Modulationssignale für die IQ-Modulatoren und dergleichen.

Etliche der in Fig. 2 bis 6 gezeigten Funktionskomponenten dienen ausschließlich oder unter anderem zur Ausführung von Überwachungsfunktionen. Die Blöcke, die diese Komponenten repräsentieren, sind in Fig. 2 bis 6 jeweils durch einen schwarzen Balken am oberen Rand gekennzeichnet. So werden beispielsweise im Signalerzeuger 28 (Fig. 3) mit Hilfe der Detektoren 66 und 68 das Phasenrauschen und die Phasenlage des Oszillatorsignals überwacht. Im Signalverteiler 30 werden mit Hilfe der Leistungssensoren 76 und 82 die Leistungspegel im Testsignalpfad und im LO-Pfad überwacht. Ebenso überwachen die Leistungssensoren 90 und Phasensensoren 92 im Sendeteil 32 (Fig. 4) die Leistungspegel und Phasen der an die Antennenelemente übermittelten Sendesignale. Auch die Kontaktprüfer 94 für das Sendeteil 32 und das Empfangsteil 34 und der Überwachungsblock 112 in der Basisbandsignal-Verarbeitungsschaltung 16 haben Überwachungsfunktionen, ebenso der Temperatursensor 40 und der Taktsignalgenerator 36 (Überwachung der Taktsignale).

In der Steuereinheit 22 (Fig. 7) werden die Überwachungssignale all dieser Komponenten von dem Überwachungsmodul 24 empfangen und auf Korrektheit überprüft. Wenn ein irregulärer Zustand festgestellt wird, so erfolgt eine Meldung an den externen Controller 18, und ggf. kann auch intern wird in der Steuereinheit 22 eine Fehlerbehandlungsroutine aktiviert werden, die je nach Art und Schwere des Fehlers geeignete Gegenmaßnahmen veranlasst, beispielsweise die Ausgabe spezieller Fehlermeldungen, eine Deaktivierung bestimmter Komponenten und Funktionen oder eine Selbstabschaltung des gesamten Radarsensors.

Zumindest einmal vor Inbetriebnahme des Radarsensors sollte jedoch auch getestet werden, ob die Überwachungsfunktionen korrekt arbeiten oder ihrerseits defekt sind. Zu diesem Zweck ist in der Steuereinheit 22 der Fehlerinjektor 26 vorgesehen, mit dem sich gezielt definierte Fehlerzustände des MMIC hervorrufen lassen, so dass dann intern innerhalb der Steuereinheit 22 oder extern im Controller 18 überprüft werden kann, ob die Fehlerzustände erkannt und richtig behandelt werden. Beispielsweise kann zu diesem Zweck eine Tabelle hinterlegt sein, die für jeden vom Fehlerinjektor 26 darstellbaren Fehler angibt, welche Systemreaktion bei diesem Fehler zu erfolgen hat, und es kann dann automatisch geprüft werden, ob die erwarteten Reaktionen tatsächlich eintreten.

Geeignete Maßnahmen zur Herbeiführung der definierten Fehlerzustände sind einerseits Hardware-Maßnahmen und andererseits Firmware-Maßnahmen.

Als Beispiel für Hardware-Maßnahmen zeigt Fig. 2 einige Schaltelemente 138 (symbolisiert durch schräge Doppelstriche), die im Testsignalpfad angeordnet sind und die direkt durch den Fehlerinjektor 26 aktiviert werden können, um die Zuführung des Testsignals ZS zu einem oder mehreren der Mischer im Empfangsteil 34 zu unterbrechen. Auf diese Weise kann der Ausfall eines oder mehrerer Mischer simuliert und dann geprüft werden, ob der Fehler korrekt erkannt wird und die Fehlerbehandlungsroutine darauf richtig reagiert. Anstelle einer Leitungsunterbrechung lässt sich mit Hilfe entsprechender Schaltelemente 138 wahlweise auch ein Kurzschluss oder eine Signaldämpfung auf der betreffenden Leitung herbeiführen. Als Alternative zeigt Fig. 5 auch Schaltelemente 140, mit denen sich die Ausgangsleitung des Mischers unterbrechen, kurzschließen oder bedämpfen lässt.

Als weiteres Beispiel für eine Hardware-Maßnahme zeigt Fig. 4 ein Schaltelement 142, mit dem sich im Sendeteil 32 das Signal am Ausgang des Verstärkers 88 blockieren oder dämpfen lässt. Der vom Leistungssensor 90 gemessene Leistungspegel wird daraufhin abfallen. So lässt sich prüfen, ob die Funktion zur Überwachung dieses Leistungspegels im Überwachungsmodul 24 korrekt arbeitet.

Alternativ könnte auch die Leitung unterbrochen, kurzgeschlossen oder bedämpft werden, die das Ausgangssignal des Leistungssensors 90 an das Überwachungsmodul 24 übermittelt.

Wenn die Funktion des Rauschsensors 66 im Signalerzeuger 28 (Fig. 3) überwacht werden soll, so kann eine Hardware-Maßnahme zur Erzeugung eines Fehlers darin bestehen, dass künstlich ein Rauschsignal erzeugt wird, vorzugsweise mit Hilfe eines der erwähnten Signalgeneratoren, die ohnehin im MMIC vorhanden sind, und dieses Rauschsignal mit Hilfe eines Signalinjektors 144 in die Leitung injiziert wird, die zum Eingang des Rauschsensors 66 führt. Alternativ könnte auch mit Hilfe eines entsprechenden Signalinjektors 146 ein Rauschsignal in den Steuerspannungseingang des Oszillators 58 injiziert werden. Dieser Signalinjektor würde zugleich eine Funktionsprüfung des Phasendetektors 68 ermöglichen, so dass geprüft werden könnte, ob der Verriegelungsstatus der PLL 62 korrekt überwacht wird.

Auf entsprechende Weise lassen sich auch Überwachungsfunktionen testen, die zur Überwachung des Rauschpegels in der Basisbandsignal-Verarbeitungsstufe 16 dienen.

Ein Beispiel für eine Firmware-Maßnahme, etwa zum Testen der Überwachungsfunktion, mit der die Sendeleistung überwacht wird, bestünde darin, dass der Fehlerinjektor 26 programmgesteuert das Steuerungsmodul 132 veranlasst, den einstellbaren Verstärker 88 im Sendeteil 32 (Fig. 4) so anzusteuern, dass die Sendeleistung künstlich herabgesetzt wird.

In einer Ausführungsform, in der die Mischer 98 im Empfangsteil 34 mit Hilfe des Steuerungsmoduls 134 einzeln abschaltbar sind, könnte die Überwachungsfunktion, mit der die Mischer überwacht werden, auch durch gezieltes Abschalten einzelner Mischer getestet werden.

Entsprechend könnte eine Überwachungsfunktion, die den Rauschpegel am Ausgang des Mischers überwacht, dadurch getestet werden, dass mit Hilfe eines vorhandenen Testsignalsgenerators und eines Signalinjektors 148 ein Rauschsignal als Mischertestsignal aufgeschaltet wird.

Eine Firmware-Maßnahme zum Test der Funktion, die den Lock-Status der PLL überwacht, könnte darin bestehen, dass im Überwachungsmodul 24 der Zustand eines Registers manipuliert wird, in dem der Lock-Status hinterlegt ist.

Ein weitere Überwachungsfunktion des Überwachungsmoduls 24 besteht in der Überwachung des LVDS-Datenstroms vom MMIC zum externen Controller 18. Diese Überwachung geschieht üblicherweise dadurch, dass mit Hilfe einer CRC-Codierungsfunktion (Cyclic Redundancy Check) eine Art Prüfsumme gebildet wird. Eine Firmware-Maßnahme zur Erzeugung eines künstlichen Fehlerzustands könnte dann darin bestehen, dass die Koeffizienten der CRC-Codierungsfunktion manipuliert werden.

Generell ist es bei allen in Fig. 2 bis 6 gezeigten Komponenten, die eine Überwachungsfunktion haben, möglich, durch Hardware- oder Firmware-Maßnahmen (oder eine Kombination von beidem) die Ausgangssignale zu manipulieren, die an das Überwachungsmodul 24 übermittelt werden, und so einen Fehlerzustand vorzutäuschen, so dass dann geprüft werden kann, ob der Fehler richtig erkannt wird.

Die Aktivierung des Fehlerinjektors 26 kann einerseits autonom aufgrund eines intern in der Steuereinheit 22 erzeugten Befehls erfolgen oder aufgrund eines von außen, vom externen Controller 18 übermittelten Befehls. Eine weitere Möglichkeit ist symbolisch in Fig. 2 dargestellt. Dort ist in der Schnittstelleneinheit 38 ein spezieller Test-Port 150 gezeigt. Das Anlegen eines Signals (einer Spannung) an diesen Port hat den Effekt, dass im Fehlerinjektor 26 ein Programm gestartet wird, mit dem eine vorgegebene Sequenz von Fehlern erzeugt wird, die dann einen Test der entsprechenden Überwachungsfunktionen ermöglichen.

## Patentansprüche

1. Radarsensor mit einem integrierten Bauelement (14) zur Erzeugung und Verarbeitung von Hochfrequenzsignalen und einem Controller (18, 22) zur Steuerung von Funktionen dieses Bauelements, einschließlich Überwachungsfunktionen, zur Überwachung der Funktionsfähigkeit des Bauelements (14), **gekennzeichnet durch** einen in das Bauelement (14) integrierten Fehlerinjektor (26) zur Erzeugung definierter Fehlerzustände für eine Funktionsprüfung der Überwachungsfunktionen.

2. Radarsensor nach Anspruch 1, bei der das Bauelement (14) mindestens ein Schaltelement (138, 140, 142) aufweist, das durch den Fehlerinjektor (26) aktivierbar und speziell dazu vorgesehen ist, eine Leitung in dem Bauelement (14) zu unterbrechen, kurzzuschließen oder zu bedämpfen, um dadurch den Fehlerzustand zu erzeugen.

3. Radarsensor nach Anspruch 1 oder 2, bei der das Bauelement (14) mindestens einen Signalgenerator und mindestens einen Signalinjektor (144, 146, 148) aufweist, der durch den Fehlerinjektor (26) aktivierbar und speziell dazu vorgesehen ist, ein von dem Signalgenerator erzeugtes Störsignal auf eine Leitung des Bauelements (14) aufzuschalten.

4. Radarsensor nach einem der vorstehenden Ansprüche, bei der das Bauelement (14) eine interne Steuereinheit (22) aufweist, die dazu eingerichtet ist, Funktionskomponenten des Bauelements zu steuern, und bei der der Fehlerinjektor (26) dazu ausgebildet ist, die Steuereinheit (22) zu veranlassen, einen Fehlerzustand durch entsprechende Ansteuerung mindestens einer Funktionskomponente zu erzeugen.

5. Radarsensor nach einem der vorstehenden Ansprüche, bei der der Fehlerinjektor (26) dazu eingerichtet ist, auf einen Testbefehl eine vorgegebene Sequenz von Fehlerzuständen zu erzeugen.

6. Radarsensor nach Anspruch 5, bei der das Bauelement (14) einen speziellen Test-Port (150) zur Eingabe des Testbefehls aufweist.

7. Radarsensor nach Anspruch 5 oder 6, bei der das Bauelement (14) eine interne Steuereinheit (22) aufweist, die dazu ausgebildet ist, unter vorgegebenen Bedingungen autonom den Testbefehl für den Fehlerinjektor (26) zu generieren.

8. Radarsensor nach Anspruch 7, bei der die Steuereinheit (22) dazu eingerichtet ist, die Reaktionen der Überwachungsfunktionen auf die vom Fehlerinjektor (26) erzeugten Fehlerzustände auf ihre Übereinstimmung mit vorgegebenen Soll-Reaktionen zu prüfen.

9. Radarsensor nach einem der vorstehenden Ansprüche, mit einem externen Controller (18), der dazu eingerichtet ist, das Bauelement (14) anzusteuern und Befehle an den Fehlerinjektor (26) zu übermitteln.

10. Radarsensor nach einem der vorhergehenden Ansprüche, der in einem Fahrerassistenzsystem in einem Kraftfahrzeug eingesetzt wird.

## Claims

1. Radar sensor having an integrated component (14) for generating and processing high frequency signals and a controller (18, 22) for controlling functions of said component, including monitoring functions, for monitoring the functional capability of the component (14), **characterized by** a fault injector (26) which is integrated into the component (14) and has the purpose of generating defined fault states for functional testing of the monitoring functions.

2. Radar sensor according to Claim 1, in which the component (14) has at least one switching element (138, 140, 142) which can be activated by the fault injector (26) and is specifically provided for interrupting, short-circuting or damping a line in the component (14) in order thereby to generate the fault state.

3. Radar sensor according to Claim 1 or 2, in which the component (14) has at least one signal generator and at least one signal injector (144, 146, 148) which can be activated by the fault injector (26) and is specifically provided for applying an interference signal, generated by the signal generator, to a line of the component (14).

4. Radar sensor according to one of the preceding claims, in which the component (14) has an internal control unit (22) which is configured to control functional components of the component, and in which the fault injector (26) is designed to cause the control unit (22) to generate a fault state by corresponding actuation of at least one functional component.

5. Radar sensor according to one of the preceding claims, in which the fault injector (26) is configured to generate a predefined sequence of fault states in response to a test command.

6. Radar sensor according to Claim 5, in which the component (14) has a specific test port (150) for inputting the test command.

7. Radar sensor according to Claim 5 or 6, in which the component (14) has an internal control unit (22) which is designed to generate the test command for the fault injector (26) autonomously under predefined conditions.

8. Radar sensor according to Claim 7, in which the control unit (22) is configured to test the reactions of the monitoring functions to the fault states generated by the fault injector (26) for their correspondence with predefined setpoint reactions.

9. Radar sensor according to one of the preceding claims, having an external controller (18) which is configured to actuate the component (14) and to transfer commands to the fault injector (26).

10. Radar sensor according to one of the preceding claims, which radar sensor is used in a driver assistance system in a motor vehicle.

## Revendications

1. Capteur radar comprenant un composant intégré (14) destiné à générer et à traiter des signaux à haute fréquence et un contrôleur (18, 22) destiné à commander des fonctions de ce composant, y compris des fonctions de surveillance, en vue de surveiller l'aptitude fonctionnelle du composant (14), **caractérisé par** un injecteur de défaut (26) intégré dans le composant (14) et destiné à injecter des états de défaut définis pour un contrôle du fonctionnement des fonctions de surveillance.

2. Capteur radar selon la revendication 1, dans lequel le composant (14) possède au moins un élément de commutation (138, 140, 142) qui peut être activé par l'injecteur de défaut (26) et qui est spécialement conçu pour interrompre, court-circuiter ou atténuer une ligne dans le composant (14) afin de générer ainsi l'état de défaut.

3. Capteur radar selon la revendication 1 ou 2, dans lequel le composant (14) possède au moins un générateur de signal et au moins un injecteur de signal (144, 146, 148), lequel peut être activé par l'injecteur de défaut (26) et est spécialement conçu pour appliquer sur une ligne du composant (14) un signal perturbateur généré par le générateur de signal.

4. Capteur radar selon l'une des revendications précédentes, dans lequel le composant (14) possède une unité de commande (22) interne qui est conçue pour commander des composants fonctionnels du composant, et dans lequel l'injecteur de défaut (26) est configuré pour amener l'unité de commande (22) à générer un état de défaut par une excitation en conséquence d'au moins un composant fonctionnel.

5. Capteur radar selon l'une des revendications précédentes, dans lequel l'injecteur de défaut (26) est conçu pour, sur une instruction de test, générer une séquence prédéfinie d'états de défaut.

6. Capteur radar selon la revendication 5, dans lequel le composant (14) possède un port de test (150) spécial servant à l'entrée de l'instruction de test.

7. Capteur radar selon la revendication 5 ou 6, dans lequel le composant (14) possède une unité de commande (22) interne qui est configurée pour, dans des conditions prédéfinies, générer de manière autonome l'instruction de test pour l'injecteur de défaut (26).

8. Capteur radar selon la revendication 7, dans lequel l'unité de commande (22) est conçue pour contrôler les réactions des fonctions de surveillance aux états de défaut générés par l'injecteur de défaut (26) afin de vérifier s'ils concordent avec des réactions voulues prédéfinies.

9. Capteur radar selon l'une des revendications précédentes, comprenant un contrôleur externe (18) qui est conçu pour exciter le composant (14) et communiquer des instructions à l'injecteur de défaut (26).

10. Capteur radar selon l'une des revendications précédentes, lequel est utilisé dans un système d'assistance au conducteur dans un véhicule automobile.
